# EUROPEAN PATENT SPECIFICATION

(11) **EP 3 594 715 B1**
(45) Date of publication and mention of the grant of the patent: **02.12.2020**
(21) Application number: 18182862.5
(22) Date of filing: 11.07.2018
(51) Int. Cl.: G01S 7/486

(54) **LIGHT DETECTION AND RANGING SENSOR UNIT**
LICHTDETEKTIONS- UND -ENTFERNUNGSMESSSENSOREINHEIT
UNITÉ DE CAPTEUR DE MESURE DE DISTANCE ET DE DÉTECTION DE LA LUMIÈRE

(43) Date of publication of application: 15.01.2020
(73) Proprietor: Conti Temic microelectronic GmbH, 90411 Nürnberg (DE); Continental Automotive GmbH, 30165 Hannover (DE)
(72) Inventor: WAGNER, Horst, 89198 Westerstetten (DE); BOJARSKI, Bernard J., Palatine, IL 60067 (US)

(56) References cited:
- US-A- 5 446 529
- US-A1- 2016 266 242
- US-B2- 9 797 995

## Description

The present invention relates to a light detection and ranging sensor unit.

US 9,277,204 B2 discloses a modular laser detection and ranging (ladar) sensor comprising a laser transmitter module, a two dimensional array of light sensitive detectors and a readout integrated circuit with a plurality of unit cell electrical circuits. Each unit cell electrical circuit is capable of amplifying a photocurrent received from a detector and sampling the amplifier output via a plurality of analog memory cells. Each unit cell electrical circuit of the readout integrated circuit contains full address decoder logic and requires the appropriate wiring to connect.

Light or laser detection and ranging sensors are especially useful for advanced driver assistance systems as these sensors do not contain moving parts and show high sensitivity. Ladar sensors may be realized in a compact design, with a high level of reliability and at low costs.

A sequential access memory read out via address pointer is described in detail in US 5,535,170 A.

To replace defect memory cells it is known from DE 600 01 291 T2 to provide spare memory cell array additionally to a normal memory cell array for self-testing and self-repairing.

In view of the prior art it is object of the invention to improve the known Lidar sensors, especially in view of cost-efficiency, reliability and scalability.

This object is achieved by a Lidar sensor unit as disclosed in claim 1. Advantageous embodiments are disclosed in the pending claims.

The invention provides a light detection and ranging (Lidar) sensor unit, especially to form part of an advanced driver assistance system, comprising a light signal source, a two dimensional array of a number of N light sensitive detectors converting impinging light into an electronic signal, a readout integrated circuit, and a processing unit, wherein the readout integrated circuit comprises a number of N memory units, each memory unit has an input connected to an output of one of said light sensitive detectors for receiving the electronic signal of the light sensitive detector, each memory unit comprises an array with I columns and J rows of analog memory cells, one column select line per column and one row select line per row for sampling the electronic signal received, each analog memory cell comprises an AND-gate a first input of the AND-gate being connected to the corresponding column select line and a second input of the AND-gate being connected to the corresponding row select line to select the analog memory cell for write and read.

It should be understood that the AND-gate or AND-function can be made from NAND gates or NOR gates or a combination of NAND-gates and switches. Thus sensor unit either uses a classical AND-gate or a combination of gates that together function equivalent to the AND-gate.

The Lidar sensor unit, depending on the light source also termed laser detection and ranging sensor unit or Ladar sensor unit, employs a light signal source, e.g. a laser source generating pulsed or modulated laser light, to send out light to an object and an array of a number of N light sensitive detectors for receiving light reflected from the object. The light sensitive detectors, e.g. photodiodes, are preferably positioned at a focal plane of a receive optics, e.g. a lens assembly and/or a lens array. Each light sensitive detector converts impinging light into an electronic signal, e.g. a photocurrent and transfers the electronic signal via an output to an input of an ascribed memory unit.

Each memory unit comprises at least one array of analog memory cells, e.g. 128 or 320 or 384 analog memory cells, to sample the electronic signal. According to a preferred embodiment each analog memory cell comprises a capacitance device for storing the analog signal. The analog memory cells are arranged in I columns and J rows along I column select lines and J row select lines. Each analog memory cell is connected to the flanking column select line and the flanking row select line via an AND-gate, i.e. a first input of the AND-gate is connected to the column select line and a second input of the AND-gate is connected to the row select line.

The maximum depth of the sampling of the electronic signal is given by the number of analog memory cells, i.e. the product of the number of columns and rows.

Thus each analog memory cell can be selected for reading and writing in an easy way utilizing a select signal, e.g. generated by the processing unit. There is no need for creating address pointer or a decoder logic or other complex logic such as level shifters within the analog memory cell array. The inventive memory unit can easily be implemented with any number of rows or columns of analog memory cells, i.e. the number of rows and/or columns of the array of analog memory cells can be scaled without the need of modifying the analog memory cells or the select signal sources. The inventive memory units have a compact design and can be processed cost-efficiently and reliably.

Auxiliary circuitry such as level shifters, or break before make may be arranged at the edge of the array and therefore does not interfere with the analog signals.

Another advantage of the invention is the separation of analog and digital components enabling for an unproblematic and area efficient isolation of analog and digital supply and simplified processing. Furthermore, the yield is improved due to the clean separation of analog and digital circuitry.

The inventive memory units can be utilized in any application in need of a scalable sequentially addressed analog memory array.

In further embodiment the processing unit comprises a trigger circuit for generating row clock pulses and column clock pulses to sequentially select the row select lines and the column select lines. For example, one clock pulse is generated with completion of each row and a column clock pulse is generated every time a complete trip through the rows has been completed to store the electronic signal as a series of at the most I time J samples subsequent in time in the array analog memory cells. Preferably the trigger circuit is capable of selective clock gating to save dynamic power.

Pursuant another embodiment the array of memory cells comprises at least one additional row or one additional column of analog memory cells and a corresponding row select line or column select line. In yet another embodiment the Lidar sensor unit comprises a list of at least one address of a defect memory cell of a memory unit to ensure that a column or row with one or more defect analog memory cells is skipped.

It is an advantage of the inventive architecture of the memory units allows for additional/redundant rows or columns of analog memory cells. One additional row or one additional column allows for skipping columns or rows marked as defective, i.e. containing at least one defective analog memory cell and using the additional row or column instead. The list of defective memory cells enables for a controlled skipping of defective cells. Thus a yield loss of the memory unit is reduced significantly.

It should be understood that the additional row or additional column is an extra row or column added supplementary to the number of rows and columns corresponding to a desired sampling depth. If, for example, the desired sampling depth is 128 a memory unit may comprise 16 rows and 8 columns plus one additional column to enable skipping of a defect memory cell. For a sampling depth of 320 a memory cells unit may comprise 16 rows and 20 columns plus the additional column. The additional row or additional column may be addressed during a read or write cycle instead of the defective row or column, i.e. jumping to the additional row or column and then continuing to read/write the columns or rows following the skipped one. Alternatively, the defective column or row is skipped, continuing the read/write cycle with the following row or column and additionally reading/writing the additional column or row at the end of the cycle, so that no complex logic is required.

Due to a further embodiment the processing unit comprises a read/write FIFO protocol to sequentially write and read the analog memory cells of each memory unit. The FIFO function enables writing and reading the inventive memory unit. Moreover, the FIFO function allows for skipping a column or a row of the array of analog memory cells marked as defective.

The invention will be explained in more detail with reference to the drawings. Similar parts are labeled with identical reference signs. The illustrated embodiments are merely schematic, i. e. distances as well as lateral and vertical extensions are not to scale and, unless stated otherwise, have no derivable geometrical relations to one another.
- Figure 1: shows a schematic view of an inventive Lidar sensor unit,
- Figure 2: shows a schematic view of a memory unit according to a first embodiment of the invention.

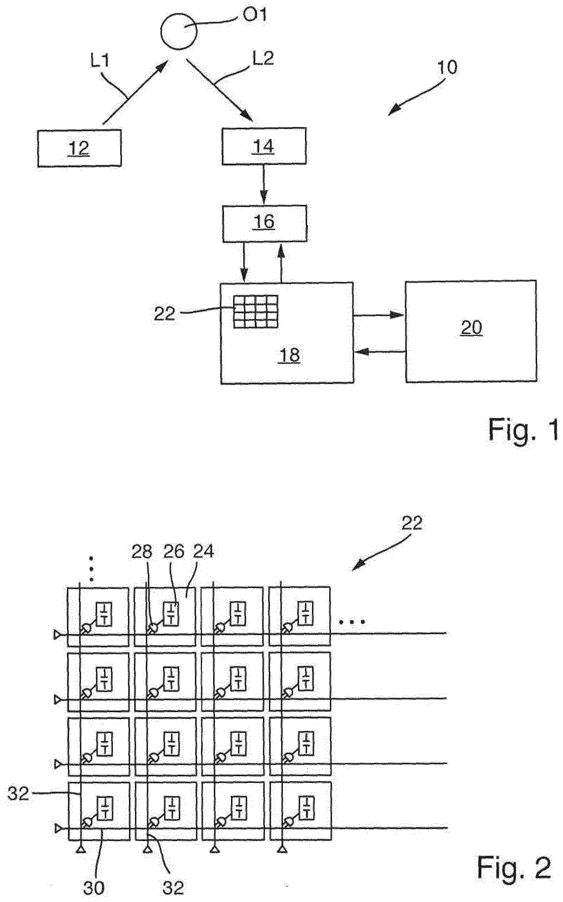

In figure 1 a schematic image of a Lidar sensor unit 10 is depicted comprising a light signal source 12 for sending out a light signal L1, a receive optics 14 for receiving a light signal L2 reflected by an object O1, a two dimensional array 16 of light sensitive detectors, a read out integrated circuit 18 and a processing unit 20.

The two dimensional array 16 of sensitive detectors comprises N light sensitive detectors, N being an integer, e.g. N being 4096. The read out integrated circuit 18 comprises one memory unit 22 per light sensitive detector of the array 16. Each memory unit 22 has an input connected to an output of the corresponding light sensitive detector.

Light impinging on the receive optics 14 is imaged on the array 16 of light sensitive detectors. Each detector converts received light into an electronic signal and transmits said electronic signal to a corresponding memory unit 22.

In figure 2, a first embodiment of one memory unit 22 is schematically depicted. Each memory unit 22 comprises an array of I columns and J rows of analog memory cells 24. A column select line 32 proceeds along each column and a row select line 30 proceeds along each row. Each analog memory cell 24 is connected to the adjacent column select line 32 as well as the adjacent row select line 30. Each analog memory cell 24 comprises a capacitance device 26 and an AND-gate 28. A first input of the AND-gate 28 is connected to the corresponding column select line and a second input of the AND-gate 28 is connected to the corresponding row select line.

The electronic signal is stored by the array of analog memory cells by sequentially selecting and charging the memory cells. Additional circuitry, such as level shifters, for the sequential selection of the analog memory cells 24 for writing and reading may be arranged at the edge of the array of analog memory cells 24.

As can be seen in the figure, the architecture allows to easily add and address additional rows or columns as well as to skip those rows and/or columns that contain defective analog memory cells.

## Claims

1. A light detection and ranging (Lidar) sensor unit (10), comprising
- a light signal source (12),
- a two dimensional array (16) of a number of N light sensitive detectors converting impinging light into an electronic signal,
- a readout integrated circuit (18) and
- a processing unit (20), wherein
- the readout integrated circuit (18) comprises a number of N memory units (22),
- each memory unit (22) has an input connected to an output of one of said light sensitive detectors (16) for receiving the electronic signal of the light sensitive detector,
- each memory unit (22) comprises at least one array with I columns and J rows of analog memory cells (24), one column select line (32) per column and one row select line (30) per row for sampling the electronic signal received, **characterized in that**:
- each analog memory cell (24) comprises an AND-gate (28) or a combination of logic gates functioning as AND-gate (28) a first input of the AND-gate (28) being connected to the corresponding column select line (32) and a second input of the AND-gate (28) being connected to the corresponding row select (30) line to select the analog memory cell (24) for writing and reading.

2. The Lidar sensor unit (10) according to claim 1 wherein each light sensitive detector of the array (16) is a photodiode.

3. The Lidar sensor unit (10) according to claim 1 or claim 2 wherein each memory unit (22) comprises 128 analog memory cells (24) or 384 analog memory cells (24).

4. The Lidar sensor unit (10) according to any one of the preceding claims wherein each analog memory cell (24) comprises a capacitance device (26) for storing an analog signal.

5. The Lidar sensor unit (10) according to any one of the preceding claims wherein the processing unit (20) comprises a trigger circuit for generating row clock pulses and column clock pulses to sequentially select the row select lines (30) and the column select lines (32).

6. The Lidar sensor unit (10) according to any one of the preceding claims wherein the array of analog memory cells (24) comprises at least one additional row or one additional column of analog memory cells (24) and a corresponding row select line (30) or column select line (32).

7. The Lidar sensor unit (10) according to any one of the preceding claims wherein the Lidar sensor unit (10) comprises a list of at least one address of a defect analog memory cell (24) of a memory unit (22).

8. The Lidar sensor unit (10) according to any one of the preceding claims wherein the processing unit (20) comprises a read/write FIFO protocol to sequentially write and read the analog memory cells (24) of each memory unit (22).

9. The Lidar sensor unit (10) according to any one of the preceding claims wherein the Lidar sensor unit (10) is part of an advanced driver assistance system.

## Patentansprüche

1. Lichtdetektions- und Entfernungsmess- (Lidar) Sensoreinheit (10), umfassend:
- eine Lichtsignalquelle (12),
- eine zweidimensionale Anordnung (16) einer Anzahl von N lichtempfindlichen Detektoren, die auftreffendes Licht in ein elektronisches Signal umwandeln,
- eine integrierte Ausleseschaltung (18) und
- eine Verarbeitungseinheit (20), wobei
- die integrierte Ausleseschaltung (18) eine Anzahl von N Speichereinheiten (22) umfasst,
- jede Speichereinheit (22) einen Eingang, der mit einem Ausgang eines der lichtempfindlichen Detektoren (16) verbunden ist, zum Empfangen des elektronischen Signals des lichtempfindlichen Detektors aufweist,
- jede Speichereinheit (22) wenigstens eine Anordnung mit I Spalten und J Reihen analoger Speicherzellen (24), eine Spaltenauswahlleitung (32) pro Spalte und eine Reihenauswahlleitung (30) pro Reihe zum Abtasten des empfangenen elektronischen Signals umfasst, **dadurch gekennzeichnet, dass**
- jede analoge Speicherzelle (24) ein AND-Gatter (28) oder eine Kombination von Logikgattern, die als AND-Gatter (28) funktioniert, umfasst, wobei ein erster Eingang des AND-Gatters (28) mit der entsprechenden Spaltenauswahlleitung (32) verbunden ist und ein zweiter Eingang des AND-Gatters (28) mit der entsprechenden Reihenauswahlleitung (30) verbunden ist, um die analoge Speicherzelle (24) zum Schreiben und Lesen auszuwählen.

2. Lidar-Sensoreinheit (10) nach Anspruch 1, wobei jeder lichtempfindliche Detektor der Anordnung (16) eine Fotodiode ist.

3. Lidar-Sensoreinheit (10) nach Anspruch 1 oder Anspruch 2, wobei jede Speichereinheit (22) 128 analoge Speicherzellen (24) oder 384 analoge Speicherzellen (24) umfasst.

4. Lidar-Sensoreinheit (10) nach einem der vorangehenden Ansprüche, wobei jede analoge Speicherzelle (24) eine Kapazitätsvorrichtung (26) zum Speichern eines analogen Signals umfasst.

5. Lidar-Sensoreinheit (10) nach einem der vorangehenden Ansprüche, wobei die Verarbeitungseinheit (20) eine Triggerschaltung zum Erzeugen von Reihen-Taktimpulsen und Spalten-Taktimpulsen zum sequenziellen Auswählen der Reihenauswahlleitungen (30) und der Spaltenauswahlleitungen (32) umfasst.

6. Lidar-Sensoreinheit (10) nach einem der vorangehenden Ansprüche, wobei die Anordnung analoger Speicherzellen (24) wenigstens eine zusätzliche Reihe oder eine zusätzliche Spalte analoger Speicherzellen (24) und eine entsprechende Reihenauswahlleitung (30) oder Spaltenauswahlleitung (32) umfasst.

7. Lidar-Sensoreinheit (10) nach einem der vorangehenden Ansprüche, wobei die Lidar-Sensoreinheit (10) eine Liste mit wenigstens einer Adresse einer defekten analogen Speicherzelle (24) einer Speichereinheit (22) umfasst.

8. Lidar-Sensoreinheit (10) nach einem der vorangehenden Ansprüche, wobei die Verarbeitungseinheit (20) ein Lese/Schreib-FIFO-Protokoll zum sequenziellen Schreiben und Lesen der analogen Speicherzellen (24) jeder Speichereinheit (22) umfasst.

9. Lidar-Sensoreinheit (10) nach einem der vorangehenden Ansprüche, wobei die Lidar-Sensoreinheit (10) Teil eines höher entwickelten Fahrerassistenzsystems ist.

## Revendications

1. Unité de capteur de mesure de distance et de détection de la lumière (Lidar) (10), comprenant :
- une source de signal de lumière (12),
- un réseau bidimensionnel (16) d'un nombre de N détecteurs sensibles à la lumière convertissant une lumière incidente en un signal électronique,
- un circuit intégré de lecture (18) et
- une unité de traitement (20),
- le circuit intégré de lecture (18) comprenant un nombre de N unités de mémoire (22),
- chaque unité de mémoire (22) ayant une entrée connectée à une sortie d'un desdits détecteurs sensibles à la lumière (16) pour recevoir le signal électronique du détecteur sensible à la lumière,
- chaque unité de mémoire (22) comprenant au moins un réseau avec I colonnes et J rangées de cellules de mémoire analogique (24), une ligne de sélection de colonne (32) par colonne et une ligne de sélection de rangée (30) par rangée pour échantillonner le signal électronique reçu, **caractérisée en ce que**
- chaque cellule de mémoire analogique (24) comprend une fonction ET (28) ou une combinaison de fonctions logiques fonctionnant en tant que fonction ET (28), une première entrée de la fonction ET (28) étant connectée à la ligne de sélection de colonne correspondante (32) et une deuxième entrée de la fonction ET (28) étant connectée à la ligne de sélection de rangée correspondante (30) pour sélectionner la cellule de mémoire analogique (24) pour l'écriture et la lecture.

2. Unité de capteur Lidar (10) selon la revendication 1, dans laquelle chaque détecteur sensible à la lumière du réseau (16) est une photodiode.

3. Unité de capteur Lidar (10) selon la revendication 1 ou la revendication 2, dans laquelle chaque unité de mémoire (22) comprend 128 cellules de mémoire analogique (24) ou 384 cellules de mémoire analogique (24).

4. Unité de capteur Lidar (10) selon l'une quelconque des revendications précédentes, dans laquelle chaque cellule de mémoire analogique (24) comprend un dispositif de capacité (26) pour stocker un signal analogique.

5. Unité de capteur Lidar (10) selon l'une quelconque des revendications précédentes, dans laquelle l'unité de traitement (20) comprend un circuit de déclenchement pour générer des impulsions d'horloge de rangée et des impulsions d'horloge de colonne pour sélectionner séquentiellement les lignes de sélection de rangée (30) et les lignes de sélection de colonne (32).

6. Unité de capteur Lidar (10) selon l'une quelconque des revendications précédentes, dans laquelle le réseau de cellules de mémoire analogique (24) comprend au moins une rangée supplémentaire ou une colonne supplémentaire de cellules de mémoire analogique (24) et une ligne de sélection de rangée (30) ou une ligne de sélection de colonne (32) correspondante.

7. Unité de capteur Lidar (10) selon l'une quelconque des revendications précédentes, dans laquelle l'unité de capteur Lidar (10) comprend une liste d'au moins une adresse d'une cellule de mémoire analogique défectueuse (24) d'une unité de mémoire (22).

8. Unité de capteur Lidar (10) selon l'une quelconque des revendications précédentes, dans laquelle l'unité de traitement (20) comprend un protocole FIFO de lecture/écriture pour écrite et lire séquentiellement les cellules de mémoire analogique (24) de chaque unité de mémoire (22).

9. Unité de capteur Lidar (10) selon l'une quelconque des revendications précédentes, dans laquelle l'unité de capteur Lidar (10) fait partie d'un système d'assistance au conducteur avancé.
